(19) Europäisches Patentamt
European Patent Office
Office européen des brevets

(11) Numéro de publication : **0 073 716**
**B1**

(12) **FASCICULE DE BREVET EUROPÉEN**

(45) Date de publication du fascicule du brevet : **07.08.85**

(51) Int. Cl.⁴ : **B 01 D 59/34**

(21) Numéro de dépôt : **82401581.2**

(22) Date de dépôt : **25.08.82**

(54) **Procédé de séparation isotopique par transfert d'énergie vibrationnelle.**

(30) Priorité : **28.08.81 FR 8116423**

(43) Date de publication de la demande : **09.03.83 Bulletin 83/10**

(45) Mention de la délivrance du brevet : **07.08.85 Bulletin 85/32**

(84) Etats contractants désignés : **DE GB IT**

(56) Documents cités :
**FR-A- 2 311 576**
**FR-A- 2 385 436**
**US-A- 4 000 420**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Angelie, Christian**
**32, rue de Versailles**
**F-91400 Orsay (FR)**
Inventeur : **Cauchetier, Michel**
**111, rue du Vieil-Orme**
**F-78120 Rambouillet (FR)**
Inventeur : **Paris, Jacques**
**35, rue du Général de Gaulle**
**F-91440 Bures sur Yvette (FR)**

(74) Mandataire : **Mongrédien, André et al**
**c/o BREVATOME 25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 073 716 B1

**Description**

La présente invention a pour objet un procédé de séparation isotopique par transfert vibrationnel observé sur le soufre mais applicable en principe à toute autre séparation d'isotopes à un degré d'efficacité variable : isotopes de l'hydrogène, du bore, du carbone, du lithium, du xénon, du plutonium, de l'uranium, etc...

Actuellement, on connaît plusieurs procédés de séparation isotopique. L'un de ces procédés est basé sur l'effet multiphotonique que l'on va brièvement rappeler.

L'effet multiphotonique consiste en l'absorption par les vibrations d'une molécule, de l'énergie lumineuse émise par une source lumineuse, et, ceci par absorption de plusieurs photons successivement jusqu'à atteindre la dissociation de la molécule. Dans un tel effet, la molécule est a priori isolée des autres molécules, et la dissociation survient pour une impulsion lumineuse assez courte et d'énergie assez élevée, c'est-à-dire en un temps inférieur au temps de collision entre molécules.

Cet effet pose des problèmes d'interprétation délicats. En particulier, il faut comprendre comment des photons de même énergie peuvent être absorbés par des transitions dont l'écart en énergie décroît lorsqu'on grimpe les niveaux vibrationnels d'une molécule. Le phénomène se décrit usuellement en considérant que les premiers niveaux vibrationnels sont discrets et nettement séparés les uns des autres et que leur absorption de lumière présente une résonance en fréquence étroite. Les niveaux plus élevés sont au contraire très denses, formant un « quasi-continuum », et leur absorption de lumière présente une bande de résonance plus large.

La sélectivité isotopique par effet multiphotonique a été décrite dans un premier article de R.V. AMBARTZUMIAN, V.S. LETOKOV, E.A. RYABOV, N.V. CHEKALIN, paru dans JEPT lett, 1974. Vol. 21, pages 171-173, et dans un deuxième article de J.L. LYMAN, R.J. JENSEN, J. RINK, C.P. ROBINSON, S.D. ROCKWOOD, paru dans Appl. Phys. Lett., 1975, Vol. 27, pages 87-89.

La sélectivité isotopique s'explique par le fait que les premiers niveaux d'énergie de la molécule présentent des largeurs de bandes de résonance étroites qui peuvent être inférieures au décalage des raies de vibrations des deux isotopes de la molécule considérée. Par exemple, pour la molécule d'hexafluorure de soufre de formule $SF_6$, le décalage isotopique entre les variétés isotopiques $^{32}SF_6$ et $^{34}SF_6$ est de 17,5 $cm^{-1}$ (948,0 $cm^{-1}$ pour le troisième mode de $^{32}SF_6$ et 930,5 $cm^{-1}$ pour le troisième mode de $^{34}SF_6$).

Malheureusement, l'utilisation de cet effet multiphotonique pour les isotopes d'un atome déterminé suppose que l'on dispose d'une molécule contenant cet atome et étant capable d'absorber la fréquence d'une source lumineuse de puissance. Dans le domaine infrarouge des raies de vibration, seul le laser à dioxyde de carbone est capable de délivrer des impulsions lumineuses intenses autour de 940 $cm^{-1}$, ce qui limite considérablement les possibilités de séparation isotopique. En particulier, si on peut séparer les variétés isotopiques $^{32}SF_6$ et $^{34}SF_6$ par effet multiphotonique en utilisant une telle source lumineuse, on ne dispose pas actuellement de source lumineuse intense pour des molécules dont la fréquence de résonance est inférieure à 800 $cm^{-1}$.

La présente invention a justement pour objet un procédé de séparation isotopique par transfert d'énergie vibrationnelle permettant de remédier à ces inconvénients. Ce procédé permet notamment d'utiliser l'énergie d'une source lumineuse existante pour réaliser un enrichissement isotopique d'un composé pour lequel on ne dispose pas actuellement de source lumineuse capable de l'exciter.

De façon plus précise, l'invention a pour objet un procédé de séparation isotopique d'un composé X présentant au moins deux formes isotopiques. Ce procédé se caractérise en ce que l'on excite les molécules du composé X, à l'état gazeux, de façon à obtenir leur dissociation, au moyen d'un transfert d'énergie vibrationnelle entre les molécules du composé X et les molécules excitées d'un composé A, à l'état gazeux, présentant une énergie de dissociation supérieure à celle du composé X, la cinétique du transfert vibrationnel étant différente pour les deux variétés isotopiques considérées dans des conditions de température telle que la largeur thermique des raies de vibrations, intervenant dans le transfert d'énergie vibrationnnelle soit au plus voisine de l'écart isotopique entre les raies de résonance des deux variétés isotopiques considérées et en ce que l'on excite les molécules du composé A par une absorption de lumière émise par une source lumineuse pulsée, la durée, l'énergie des impulsions lumineuses, et la section irradiée étant telles que le temps d'absorption de la lumière par les molécules du composé A soit inférieur au temps d'excitation des molécules du composé X jusqu'à leur dissociation.

L'invention a aussi pour objet un procédé de séparation isotopique d'un composé X présentant au moins deux variétés isotopiques, caractérisé en ce que l'on excite les molécules du composé X, à l'état gazeux, de façon à obtenir leur excitation jusqu'à un niveau non dissociatif, au moyen d'un transfert d'énergie vibrationnelle entre les molécules du composé X et les molécules excitées d'un composé A, à l'état gazeux, la cinétique du transfert vibrationnel étant différente pour les deux variétés isotopiques considérées dans des conditions de température telles que la largeur thermique des raies de vibration, intervenant dans le transfert d'énergie vibrationnelle soit au plus voisine de l'écart isotopique entre les raies de résonance des deux variétés isotopiques considérées, en ce que l'on envoie sur les molécules excitées du composé X un rayonnement ultraviolet conduisant à la séparation isotopique effective, et en ce que l'on excite les molécules du composé A par une absorption de lumière émise par une source

lumineuse pulsée, la durée, l'énergie des impulsions lumineuses et la section irradiée étant telles que le temps d'absorption de la lumière par les molécules du composé A soit inférieur au temps d'excitaiton des molécules du composé X jusqu'au niveau vibrationnel désiré.

La mise en œuvre du procédé peut nécessiter un refroidissement pour satisfaire la condition de largeur thermique des raies de vibration. Ce refroidissement peut, soit être obtenu directement sur une cellule, soit nécessiter pour certains composés l'utilisation d'un jet moléculaire. Les produits peuvent être soit contenus dans une cellule fermée (régime statique) soit traverser la cellule (régime dynamique) pour les récupérer de façon continue.

Ce procédé permet bien de remédier aux inconvénients du procédé multiphotonique direct car l'excitation des molécules du composé X se fait, de façon sélective, par un transfert vibrationnel entre ce composé X et un autre composé A dont les molécules peuvent être excitées par l'absorption de l'énergie lumineuse fournie par une source lumineuse existante. Il est à noter que ceci ne peut se faire sans dissociation de A que si l'énergie de dissociation du composé A est supérieure à celle du composé X. L'absorption de la lumière par le composé A se fait par effet multiphotonique.

Selon un mode préféré de réalisation de l'invention, la source lumineuse est un laser pulsé pouvant être par exemple un laser à dioxyde de carbone.

Selon un autre mode préféré de réalisation de l'invention, le composé A est choisi dans le groupe comprenant l'hexafluorure de soufre, le tétrafluorure de silicium, le trichlorure de bore et toute autre molécule à grande énergie de dissociation absorbant les raies du laser à dioxyde de carbone.

Selon un autre mode préféré de réalisation de l'invention, les densités moléculaires sont inférieures à $2 \cdot 10^{17}$ molécules/$cm^3$ soit environ 750 pascals à 300 K.

Selon un autre mode préféré de réalisation de l'invention, la durée des impulsions lumineuses à mi-hauteur est inférieure à 500 nanosecondes.

Selon un autre mode préféré de réalisation de l'invention, on augmente la dissociation du composé X en mélangeant à celui-ci un composé B tel que de l'hydrogène ou tout autre composé capable de capter des radicaux ou atomes libres issus de X et capable ainsi d'éviter des réactions secondaires.

D'autres caractéristiques et avantages de l'invention ressortiront mieux à la lecture de la description qui va suivre, donnée à titre seulement explicatif mais nullement limitatif en référence aux figures annexées dans lesquelles :

la figure 1 représente schématiquement un dispositif permettant la mise en œuvre du procédé selon l'invention,

la figure 2 représente la dissociation du chloropentafluorure de soufre ; cette dissociation est illustrée par les variations relatives des pressions partielles en fonction du nombre n d'impulsions lumineuses,

la figure 3 représente la cinétique de décomposition du chloropentafluorure de soufre ; cette cinétique est illustrée par les variations de la fraction restante f de ce composé en fonction du nombre n d'impulsions lumineuses,

les figures 4 et 5 représentent la variation de la sélectivité isotopique des isotopes $^{33}S$ et $^{32}S$, c'est-à-dire du coefficient $1/\alpha_{33/32}$ et du taux de dissociation δ du chloropentafluororure de soufre en fonction de sa pression initiale P exprimée en millitorr, pour la figure 4, et en fonction de l'énergie W exprimée en joule, pour la figure 5,

la figure 6 qui illustre la sélectivité isotopique entre les espèces $^{34}SF_5Cl$ et $^{32}SF_5Cl$ représente les variations du coefficient $1/\alpha_{34/32}$ en fonction du coefficient $1/\alpha_{33/32}$,

les figures 7 et 8 représentent la courbe de dissociation de l'oxytétrafluorure de xénon, donnant la fraction restante f de ce composé en fonction du nombre n d'impulsions lumineuses, la figure 7 représentant la dissociation de ce composé par effet multiphotonique et la figure 8 par le procédé de l'invention,

la figure 9 représente l'absorbance Abs du tétrafluorure de xénon obtenu par dissociation de l'oxytétrafluorure de xénon, en fonction du nombre n d'impulsions lumineuses.

La dissociation d'une molécule X par transfert vibrationnel avec une molécule A préalablement excitée par laser a fait l'objet de plusieurs études qui n'ont toutefois pas concerné la sélectivité isotopique (R.S. KARVE et al. Chem. Phys. Lett. Vol. 78 n° 2 p. 273-276).

Selon l'invention, le procédé de séparation isotopique consiste en l'absorption par des molécules d'un composé A d'un faisceau lumineux pulsé, présentant une fréquence optique donnée, émis par une source lumineuse pulsée. Ces molécules en captant l'énergie fournie par le faisceau lumineux pulsé, se retrouvent dans un état excité. Elles sont alors capables d'exciter des molécules d'un composé X, présentant au moins deux variétés isotopiques notées $X_1$, et $X_2$, par un transfert vibrationnel jusqu'à un niveau d'énergie élevé conduisant à la dissociation des molécules du composé X.

La dissociation des molécules du composé X, au moyen d'un transfert vibrationnel avec des molécules d'un composé A, excitées jusqu'à un niveau d'énergie élevé, ne peut se faire sans dissocier notablement A que si l'énergie de dissociation des molécules du composé A est supérieure à celle des molécules du composé X.

Selon une autre variante les molécules du composé X peuvent être excitées par transfert vibrationnel jusqu'à un niveau vibrationnel non dissociatif. Une deuxième action, non nécessairement sélective isotopiquement, conduit à la séparation effective des deux variétés isotopiques (par exemple utilisation

d'un rayonnement ultraviolet...). Dans ce cas la condition d'énergie de dissociation sur A peut ne plus être nécessaire.

La séparation isotopique des variétés isotopiques du composé X réside dans une sélectivité isotopique dans la dissociation des molécules dudit composé. Cette sélectivité isotopique est possible lorsque les impulsions lumineuses fournies par la source sont capables d'apporter une énergie suffisante aux molécules A pour conduire à la dissociation des molécules X. Ces impulsions lumineuses doivent être très courtes, c'est-à-dire que la durée de ces impulsions ne doit pas excéder quelques collisions entre les molécules A et les molécules X, de façon à éviter que des collisions entre les deux variétés isotopiques concernées $X_1$ et $X_2$ n'aboutissent à une dégradation de la sélectivité du transfert vibrationnel entre les molécules du composé A et les molécules des variétés isotopiques $X_1$ et $X_2$.

Pour des composés A et X, à l'état gazeux, présentant des pressions partielles de l'ordre de 135 pascals (1 torr) à une température de 300 K, les temps de collision des molécules du composé A et des molécules du composé X étant d'environ 100 nanosecondes, on utilisera des impulsions lumineuses dont la durée est de l'ordre de 100 nanosecondes et dont l'énergie est de l'ordre du joule, énergie permettant d'obtenir les fluences de quelques joules par $cm^2$ nécessaires à l'excitation de A jusqu'à un niveau vibrationnel assez élevé bien que non dissociatif.

De telles caractéristiques des impulsions lumineuses peuvent être obtenues au moyen d'une source de lumière pulsée du type laser et notamment en utilisant un laser pulsé à dioxyde de carbone.

Il est à noter que l'utilisation d'une source de lumière continue, conduisant à des échanges d'énergie lumineuse lents devant les temps de transfert vibrationnels entre les molécules du composé A et celles du composé X ne peut conduire à une sélectivité isotopique, d'où la nécessité d'utiliser une source de lumière pulsée.

On va maintenant donner les conditions essentielles pour la mise en œuvre du procédé de séparation isotopique conformément à l'invention.

En premier lieu, la cinétique du transfert vibrationel est sélective pour l'une des variétés isotopiques dans des conditions de température telles que la largeur thermique des raies vibrationnelles, intervenant dans le transfert vibrationnel, soit inférieure, ou au plus du même ordre de grandeur que l'écart isotopique entre les deux raies de vibrations des deux variétés isotopiques considérées.

Ce critère est identique à celui connu en séparation isotopique par absorption directe de lumière. Par exemple, dans le cas d'un composé X tel que le chloropentafluorure de soufre de formule $SF_5Cl$, l'écart isotopique est de 16 $cm^{-1}$ (910 $cm^{-1}$ pour le huitième mode de $^{32}SF_5Cl$, 902 $cm^{-1}$ pour le huitième mode de $^{33}SF_5Cl$ et 894 $cm^{-1}$ pour le huitième mode de $^{34}SF_5Cl$). A température ambiante, ce critère est satisfait, ce qui explique la possibilité d'une sélectivité isotopique, par transfert vibrationnel.

Bien entendu, ceci n'est qu'un exemple et la température satisfaisant à ce critère peut être soit très supérieure à la température ambiante, soit très inférieure à cette même température.

En deuxième lieu, la largeur de la bande de fréquence de la résonance du transfert vibrationnel doit être, au moins pour certaines étapes de ce transfert, inférieure ou du même ordre de grandeur que l'écart de fréquences vibrationnelles entre A et la plus proche des variétés isotopiques $X_1$ ou $X_2$.

Le transfert vibrationnel se produisant probablement en plusieurs transferts successifs, il peut, comme dans l'effet multiphotonique n'y avoir sélectivité que pour certains de ces transferts, les transferts vibrationels les plus sélectifs ayant probablement lieu à bas niveaux d'énergie.

De plus, comme on l'a déjà dit précédemment, la sélectivité isotopique de l'une des variétés isotopiques du composé X dépend de la durée des impulsions lumineuses. Il en est d'ailleurs de même pour l'énergie de ces impulsions. En tout état de cause, la durée et l'énergie de ces impulsions lumineuses doivent être telles que le temps d'absorption de la lumière par les molécules du composé A soit inférieur au temps moyen d'excitation des molécules du composé X par les molécules du composé A jusqu'à la dissociation des molécules du composé X.

Sur la figure 1, on a représenté le dispositif permettant la mise en œuvre du procédé de l'invention.

Ce dispositif comprend une source lumineuse pulsée 2 telle qu'un laser à dioxyde de carbone à excitation électronique par décharge transverse et à pression de gaz atmosphérique, connu sous l'abréviation de laser TEA $CO_2$. La durée de l'impulsion lumineuse est formée d'un pic de 10 nanosecondes suivi d'une traîne de 1,5 microseconde, contenant la moitié de l'énergie totale de l'impulsion. L'énergie de cette impulsion qui peut varier autour de 5 joules, par action sur la tension de décharge peut être mesurée au moyen d'un calorimètre amovible 4. La référence 5 représente le calorimètre en position hors mesure. Le laser est utilisé à une récurrence d'une impulsion par seconde. Ce laser à $CO_2$ produit des impulsions lumineuses ayant une fréquence voisine de 940 $cm^{-1}$. La fréquence lumineuse nécessaire à l'excitation des molécules du composé A, se trouvant à l'état gazeux dans une cellule de mesure 6 en acier inoxydable, est déterminée au moyen d'un réseau 8 et la largeur de l'impulsion lumineuse est définie au moyen d'un diaphragme 10.

L'impulsion lumineuse ainsi définie est ensuite réfléchie sur un miroir 12 et est focalisée en un point F, situé dans la celule de mesure 6, au moyen d'une lentille convergente 14 présentant par exemple une focale de 19 cm et réalisée notamment en germanium. La cellule 6, limitée par des fenêtres telles que 16 en chlorure d'argent présente par exemple un volume de 310 $cm^3$. Cette cellule est placée dans un spectromètre infrarouge 18 à double faisceaux lumineux qui traversent la celule 6 transversalement. Ce spectromètre 18 comprenant, de plus, une cellule de référence 20 permet le dosage des composés X et A

contenus dans la cellule de mesure 6. Des prélèvements gazeux effectués en fin d'expérience permettent une analyse isotopique du composé X sur un spectromètre de masse (non représenté).

Il est à noter que l'énergie lumineuse à l'intérieur de la cellule de mesure 6 vaut environ 0,6 fois l'énergie mesurée au calorimètre 4, en raison de l'atténuation de celle-ci par la lentille 14 et la première fenêtre 16.

On va maintenant donner des exemples de réalisation du procédé de l'invention.

Le premier exemple concerne la dissociation du chloropentafluorure de soufre de formule $SF_5Cl$ par excitation vibrationnelle avec l'hexafluorure de soufre de formule $SF_6$. Cet exemple permet d'illustrer la sélectivité isotopique du procédé de l'invention.

Dans une première expérience, on remplit la cellule de mesure 6 du dispositif de la figure 1 d'un mélange de 48,6 pascals (0,36 torr) de $SF_6$ et de 51,3 pascals (0,38 torr) de $SF_5Cl$. Le mélange est excité par le laser 2 à $CO_2$ focalisé à une fréquence de 944 $cm^{-1}$, fréquence qui est voisine du troisième mode de $SF_6$, avec une énergie de 5,0 joules par impulsion lumineuse.

La dissociation du chloropentafluorure de soufre est régie par les trois réactions suivantes :

$$SF_5Cl \rightleftarrows SF_5. + Cl. \quad (1)$$
$$SF_5. \rightleftarrows SF_4 + F. \quad (2)$$
$$F. + SF_5. \rightarrow SF_6 \quad (3)$$

Il est à noter que les atomes de fluor et de chlore disparaissent par formation de fluor gazeux ($F_2$), de chlore gazeux ($Cl_2$) et de fluorure de chlore (FCl).

Sur la figure 2, on a représenté la dissociation du chloropentafluorure de soufre. Cette dissociation est illustrée par les variations relatives des pressions partielles en fonction du nombre n d'impulsions lumineuses. La courbe a indique la disparition du chloropentafluorure de soufre ($SF_5Cl$), la courbe b la formation du tétrafluorure de soufre ($SF_4$) (réaction (2)) et la courbe c la variation de l'hexafluorure de soufre ($SF_6$).

On constate sur cette figure, que dans une première phase, la quantité de $SF_6$ augmente, ce qui s'explique par la réaction 3, puis passe par un maximum et, que, dans une deuxième phase, la quantité de $SF_6$ décroît, ceci étant dû à une dissociation multiphotonique de $SF_6$, c'est-à-dire par irradiation directe, en $SF_4$ et $F_2$ qui l'emporte sur la formation de $SF_6$ par la réaction (3) lorsque $SF_5Cl$ est suffisamment dissocié.

Comme le montre la figure 3, donnant les variations de la fraction restante f de $SF_5Cl$ en fonction du nombre n d'impulsions lumineuses, la cinétique de décompositon du composé $SF_5Cl$ est d'ordre 1 jusqu'à 90 % de dissociation dudit composé et donne un taux de décomposition par impulsion lumineuse de $3{,}27.10^{-2}$.

Il est à noter que les molécules de $SF_5Cl$ se dissocient de façon négligeable par irradiation directe, la raie d'absorption la plus proche de $SF_5Cl$ étant à 909 $cm^{-1}$ alors que la fréquence lumineuse émise par le laser à dioxyde de carbone est de 944 $cm^{-1}$.

Dans une deuxième expérience, illustrant la sélectivité isotopique, on remplit la cellule de mesure 6 du dispositif de la figure 1 d'un mélange de 14,85 pascals (0,11 torr) de $SF_6$ et de 14,85 pascals de $SF_5Cl$, le soufre contenu dans le composé $SF_5Cl$ étant présent sous trois formes isotopiques $^{32}S$, $^{33}S$, $^{34}S$. Le mélange est excité par le laser à $CO_2$ focalisé, accordé à une fréquence de 944 $cm^{-1}$ avec une énergie de 5,1 joules. Au bout de 100 impulsions lumineuses, la fraction restante f par rapport à la concentration initiale de la variété isotopique $^{32}SF_5Cl$ qui est la variété prédominante dans le mélange initial, n'est plus que de 0,53 et la dissociation s'accompagne d'un enrichissement des variétés isotopiques $^{33}SF_5Cl$ et $^{34}SF_5Cl$. Cette sélectivité isotopique de la dissociation des molécules de $SF_5Cl$ est illustrée dans le tableau I ci-après.

Tableau I

| Séparation isotopique | $^{33}S/^{32}S$ naturel | $^{34}S/^{32}S$ naturel | $\beta_{33/32}$ | $\alpha_{33/32}$ | $\beta_{34/32}$ | $\alpha_{34/32}$ |
|---|---|---|---|---|---|---|
| par transfert vibrationnel | 0,00790 ±0,00005 | 0,0448 ±0,0003 | 1,09 | 0,86 | 1,15 | 0,78 |

La première colonne de ce tableau indique la fraction ou pourcentage de $^{33}S$ par rapport à $^{32}S$ dans le mélange isotopique initial de $SF_5Cl$, c'est-à-dire le rapport naturel de $^{33}S/^{32}S$, et la deuxième colonne donne le rapport natuel de $^{34}S/^{32}S$ dans le mélange isotopique initial ;

la troisième colonne donne la paramètre $\beta_{33/32}$ répondant à l'équation :

$$\beta_{33/32} = [(^{33}S/^{32}S) \text{ après dissociation}]/[(^{33}S/^{32}S) \text{ initial}] ;$$

la cinquième colonne le paramètre $\beta_{34/32}$ répondant à l'équation :

$$\beta_{34/32} = [(^{34}S/^{32}S) \text{ après dissociation}]/[(^{34}S/^{32}S) \text{ initial}] ;$$

la quatrième colonne donne le paramètre $\alpha_{33/32}$ répondant à l'équation :

$$\alpha_{33/32} = 1 + [(\text{Ln } \beta_{33/32})/(\text{Ln } f)]$$

dans laquelle f représente la fraction restante de $^{32}SF_5Cl$ ; et

la sixième colonne donne le paramètre $\alpha_{34/32}$ répondant à l'équation :

$$\alpha_{34/32} = 1 + [(\text{Ln } \beta_{34/32})/(\text{Ln } f)$$

Lorsque la cinétique de décomposition est d'ordre 1, le paramètre $\alpha_{33/32}$ n'est autre que le rapport des taux de dissociation par impulsion lumineuse de l'isotope $^{33}S$ par rapport à l'isotope $^{32}S$ et caractérise donc la différence de cinétique dans la dissociation de $SF_5Cl$. De même, le paramètre $\alpha_{34/32}$ représente le rapport des taux de dissociation par impulsion lumineuse de l'isotope $^{34}S$ par rapport à l'isotope $^{32}S$.

Des expériences complémentaires systématiques ont été effectuées sur la dissociation des variétés isotopiques de $SF_5Cl$ photosensibilisé par $SF_6$. Ces expériences ont montré que des sélectivités isotopiques très supérieures à celles obtenues précédemment peuvent être atteintes. Tout d'abord, le faisceau du laser a été utilisé sans focalisation, ce qui rend l'irradiation beaucoup plus homogène.

La figure 4 montre la variation de la sélectivité isotopique des isotopes $^{33}S$ et $^{32}S$ illustrée par le coefficient $1/\alpha_{33/32}$ et du taux de dissociation $\delta$ de $SF_5Cl$ en fonction de la pression initiale P de $SF_5Cl$, exprimée en millitorr, pour des rapports de pressions de $SF_6/SF_5Cl$ égaux à 2/1 et une fluence de l'irradiation d'environ 2 joules/cm$^2$. On constate que pour 25 millitorrs (3,34 Pa) de $SF_5Cl$ et 50 millitorrs de $SF_6$ (6,68 Pa), le coefficient $1/\alpha_{33/32}$ atteint la valeur 1,45.

La figure 5 montre la variation de la sélectivité isotopique des isotopes $^{33}S$ et $^{32}S$ illustrée par le coefficient $1/\alpha_{33/32}$, et du taux de dissociation $\delta$ de $SF_5Cl$ en fonction de l'énergie W de l'impulsion laser exprimée en joule (répartie sur 2 cm$^2$ environ), pour un mélange gazeux constitué de 150 millitorrs de $SF_6$ (20,0 Pa) et de 75 millitorrs de $SF_5Cl$ (10,0 Pa). On constate que vers 1,7 joules, le coefficient $1/\alpha_{33/32}$ atteint la valeur de 1,57.

Des mesures de la sélectivité isotopique entre les espèces $^{34}SF_5Cl$ et $^{32}SF_5Cl$ ont aussi été effectuées systématiquement ; on a constaté, quelles que soient les conditions de pression ou d'énergie de l'impulsion laser, une forte corrélation entre les sélectivités isotopiques des isotopes $^{34}S$ et $^{32}S$ d'une part et $^{33}S$ et $^{32}S$ d'autre part, c'est-à-dire entre les coefficients $\alpha_{34/32}$ et $\alpha_{33/32}$. La relation $\alpha_{34/32} = (\alpha_{33/32})^2$ est vérifiée sur la courbe de la figure 6, donnant les variations du coefficient $1/\alpha_{34/32}$ en fonction du coefficient $1/\alpha_{33/32}$. Le maximum du coefficient $1/\alpha_{33/32}$ atteint dans ces expériences est de 1,60 et correspond au maximum du coefficient $1/\alpha_{34/32}$ voisin de 2,55.

Les sélectivités isotopiques des isotopes $^{34}S$ et $^{32}S$, donc les valeurs de $1/\alpha_{34/32}$, sont à comparer à celles obtenues par une excitation multiphotonique directe des molécules $SF_5Cl$, les résultats étant tirés de la référence suivante : K.M. LEARY et al, J. Chem. Phys., vol. 68, 1978, p. 1671. La meilleure sélectivité isotopique atteinte dans ces expériences a concerné 0,25 torr (33,4 Pa) de $SF_5Cl$ irradié à 905 cm$^-$ et, dans ces conditions, le coefficient $1/\alpha_{34/32}$ vaut 2,32.

On constate donc que la sélectivité isotopique par transfert vibrationnel est tout à fait compétitive par rapport à celle de l'excitation multiphotonique directe dans le cas où le composé X présent sous plusieurs formes isotopiques, peut être dissocié soit par transfert vibrationnel, soit par effet multiphotonique.

De plus, comme on l'a déjà dit précédemment, la séparation isotopique par transfert vibrationnel est d'application beaucoup plus large que la séparation isotopique par effet multiphotonique.

En effet, bien que le mécanisme exact du transfert vibrationnel soit mal connu, on pense que, pour être efficace, ce transfert vibrationnel doit être résonnant. Cette résonance peut se produire entre deux vibrations simples des molécules du composé A et du composé X, mais elle peut aussi faire intervenir des harmoniques de vibrations, ou des combinaisons de vibrations (échange d'énergie simultanément sur plusieurs niveaux de vibrations desdites molécules).

Par ailleurs, le transfert ne se fait pas nécessairement par la vibration des molécules du composé A qui absorbe l'énergie lumineuse, car dans les niveaux d'énergie les plus élevés, une redistribution d'énergie s'effectue sur toutes les vibrations des molécules en raison des couplages internes entre les différents modes de vibration de celle-ci. C'est cette grande variété de transferts possibles qui donne son intérêt à cette méthode d'excitation et de dissociation et permet de dissocier des molécules que l'on n'est pas capable actuellement de dissocier par effet multiphotonique direct.

Dans l'exemple décrit ci-dessus, le transfert vibrationnel s'opère probablement par les « quasi-résonances » entre le troisième mode de $SF_6$ à 948 cm$^{-1}$ et le huitième mode de $SF_5Cl$ à 909 cm$^{-1}$ et entre le quatrième mode de $SF_6$ à 615 cm$^{-1}$ et le troisième mode de $SF_5Cl$ à 600 cm$^{-1}$.

Le deuxième exemple concerne la dissociation de l'oxytétrafluorure de xénon de formule $XeOF_4$ par excitation avec l'hexafluorure de soufre. Cet exemple permet d'illustrer l'augmentation du taux de

dissociation d'une molécule en utilisant le procédé de l'invention par rapport à l'utilisation de l'effet multiphotonique.

Les molécules de $XeOF_4$ présentent une première transition à 926 $cm^{-1}$ voisine de l'une des fréquences d'émission du laser $CO_2$ qui est elle à 929 $cm^{-1}$. Ceci permet de faire une dissociation multiphotonique directe de $XeOF_4$ par un tel laser.

Dans une première expérience, on remplit la cellule de mesure 6 du dispositif de la figure 1 du composé gazeux $XeOF_4$, présentant une pression de 81 pascals (0,6 torr). Ce composé est excité au moyen du laser à $CO_2$ accordé, à l'aide du réseau 8, à 929 $cm^{-1}$. La dissociation de $XeOF_4$, suivie au spectromètre infrarouge 18 obéit à la réaction (4).

$$XeOF_4 \rightarrow XeF_4 + 1/2O_2 \qquad (4)$$

Sur la figure 7, on a représenté, pour cette première expérience, la courbe de dissociation de $XeOF_4$ donnant la fraction restante f de $XeOF_4$ en fonction du nombre d'impulsions lumineuses n pour une énergie desdites impulsions de 4,8 joules. On obtient un taux de dissociation de $4,8.10^{-4}$. On obtient un taux de dissociation de $4,8.10^{-4}$ par impulsion lumineuse.

Dans une deuxième expérience, on remplit la cellule de mesure 6 du dispositf de la figure 1 d'un mélange contenant 58,05 pascals (0,43 torr) de $XeOF_4$ et de 47,25 pascals (0,35 torr) de $SF_6$5. Le mélange est irradié par un laser à $CO_2$ accordé à une fréquence de 944 $cm^{-1}$ avec une énergie de 4,8 joules.

La figure 8 montre, pour cette deuxième expérience, la dissociation des molécules de $XeOF_4$ et donne le taux de dissociation de ces molécules par impulsions lumineuses qui est de $9.10^{-2}$, soit une dissociation 60 fois plus rapide que celle obtenue par effet multiphotonique direct (première expérience). Ceci illustre pour cette molécule la supériorité de dissociation par transfert vibrationnel par rapport au processus multiphotonique direct, pour une même énergie fournie par le laser.

Il est à noter que la courbe représentée sur la figure 8 est parfaitement linéaire, ce qui traduit une cinétique d'ordre 1 de la réaction (4).

Sur la figure 9, on a représenté l'absorbance Abs du tétrafluorure de xénon de formule $XeF_4$, obtenu suivant la réaction (4), en fonction du nombre n d'impulsions lumineuses, l'absorbance étant exprimée par des unités arbitraires. On constate sur cette figure que, dans une première phase, la quantité de $XeF_4$ augmente (réaction (4)) puis passe par un maximum et, que, dans une deuxième phase la quantité de $XeF_4$ décroît ; ceci s'explique par la dissociation de $XeF_4$en $XeF_2$ et $F_2$ par un nouveau transfert vibrationnel de $SF_6$ sur $XeF_4$.

Le transfert vibrationnel de $SF_6$ sur $XeOF_4$ s'effectue sans doute par les « quasi-résonances » entre le troisième mode de $SF_6$ à 948 $cm^{-1}$ et le premier mode de $XeOF_4$ à 926 $cm^{-1}$ et entre le quatrième mode de $SF_6$ à 615 $cm^{-1}$ et le septième mode de $XeOF_4$ à 608 $cm^{-1}$.

L'effet isotopique dans la dissociation par transfert vibrationnel a aussi été constaté sur les variétés isotopiques $^{12}CF_3I$ et $^{13}CF_3I$, en présence de $SF_6$ excité par un laser $CO_2$ TEA pulsé. Comme dans les expériences précédentes, $SF_6$ dissocie de façon négligeable. Les réactions chimiques concernant la dissociation de $CF_3I$ ou iodotrifluorure de carbone sont :

$$CF_3I \rightarrow CF_3. + I.$$
$$CF_3. + CF_3. \rightarrow C_2F_6$$
$$I. + I. \rightarrow I_2$$

Dans toutes les expériences, la variété isotopique $^{13}CF_3I$ dissocie préférentiellement. Le tableau II ci-joint rassemble les résultats de plusieurs expériences (différentes pressions de $SF_6$ et de $CF_3I$ dans le mélange gazeux initial) effectuées avec un faisceau laser non focalisé, accordé à 942 $cm^{-1}$ et présentant une énergie d'environ 4,4 joules. Le tableau donne le taux de dissociation de $^{12}CF_3I$ par impulsion, $\delta_{CF_3I}$ l'enrichissement isotopique $\beta_{13/12}$ et la sélectivité isotopique des isotopes $^{13}C$ et $^{12}C$ représentée par le coefficient $\alpha_{13/12}$, définis comme précédemment, et enfin l'enrichissement isotopique dans le produit formé $C_2F_6$ représenté par le coefficient $\beta'_{13/12}$. Ce coefficient est défini par l'équation suivante, après N tirs laser :

$$\beta'_{13/12} = [R_{13/12(N)}\,(C_2F_6)]/[R_{13/12(O)}\,(CF_3I)]$$

où $R_{13/12(N)}$ (Y) est, au bout de N tirs lasers le rapport de la quantité totale de $^{13}C$ présent dans Y à la quantité totale de $^{12}C$ présent dans Y.

La meilleure valeur du coefficient $\alpha_{13/12}$ illustrant la sélectivité isotopique de $^{13}C$ et $^{12}C$ et obtenue dans ces expériences est donc 1,23.

Le transfert vibrationnel déterminant la sélectivité isotopique intervient sans doute entre le troisième mode $\nu_3$ de $SF_6$(948 $cm^{-2}$) et le premier mode $\nu_1$ de $CF_3I$ qui vaut 1 075 $cm^{-1}$ pour $^{12}CF_3I$ et 1 047 $cm^{-1}$ pour $^{13}CF_3I$. L'énergie de dissociation de $CF_3I$ qui n'est que de 55 Kcal/mole est très inférieure à celle de $SF_6$.

Les expériences précédentes sur $CF_3I$ ont révélé un inconvénient néfaste à la sélectivité isotopique. En effet, l'iode moléculaire formé, $I_2$, tend à réagir avec les radicaux $CF_3$. formés, de sorte que $CF_3I$ est

régénéré. Dans le but d'éviter cet effet, une grille d'argent est introduite dans la cellule de mesure, comme cela est utilisé pour la dissociation multiphotonique directe de $CF_3I$. L'utilisation d'une telle grille d'argent a été décrite dans la demande de brevet français n° 2 454 836 du 27/4/1979 intitulé « Procédé de séparation des isotopes $^{12}C$ et $^{13}C$ du carbone » (M. CAUCHETIER, G. FOLCHER, P. SCHNURIGER).

Les réactions chimiques mises en jeu dans la dissolution de $CF_3I$ sont alors :

$$CF_3I \rightarrow CF_3. + I.$$
$$CF_3. + CF_3. \rightarrow C_2F_6$$
$$I. + Ag \rightarrow AgI$$

Le tableau III ci-joint montre la variation du taux de dissociation par impulsion de $CF_3I$, $\delta_{CF_3I}$, et de la sélectivité isotopique des isotopes $^{13}C$ et $^{12}C$ illustrée par le coefficient $\alpha_{13/12}$, en fonction de la pression de $SF_6$ et de $CF_3I$, pour différents mélanges de $SF_6$ et de $CF_3I$ irradiés autour de 3 joules par impulsion. On constate que la présence de la grille d'argent améliore le taux de dissociation et la sélectivité isotopique. Dans le cas d'une pression de $SF_6$ de 250 mTorrs (33,4 Pa) et d'une pression de $CF_3I$ de 50 mTorrs (6,68 Pa) en présence de la grille d'argent, on a obtenu un coefficient $\alpha_{13/12}$ de 1,55 illustrant la sélectivité isotopique entre $^{13}C$ et $^{12}C$.

Cet exemple montre donc que la dissociation isotopiquement sélective des isotopes du carbone est possible avec de bonnes sélectivités isotopiques, par le procédé conforme à l'invention.

Le procédé de l'invention peut aussi être utilisé pour la séparation isotopique des espèces isotopiques $^{10}BBr_3$ et $^{11}BBr_3$ en présence de $SF_6$ excité par un laser à $CO_2$. L'espèce $^{10}BBr_3$ présente un mode de vibration à 856 $cm^{-1}$ et l'espèce $^{11}BBr_3$ un mode de vibration à 819 $cm^{-1}$. Un coefficient $\alpha_{10/11}$ voisin de 2,0, illustrant la sélectivité isotopique entre $^{10}B$ et $^{11}B$, peut être obtenu.

Le procédé de l'invention peut encore être utilisé pour séparer des isotopes de l'hydrogène tels que H et D, sur les espèces isotopiques $CHBr_3$ et $CDBr_3$ en présence de $SF_6$. Les molécules de $SF_6$ absorbent en effet les raies du laser à $CO_2$ autour de 948 $cm^{-1}$ et le transfert vibrationnel sélectif isotopiquement peut s'effectuer à partir de la quatrième raie de vibration $\nu_4$ de $SF_6$ (615 $cm^{-1}$) vers les raies de vibration de $CHBr_3$ à 669 $cm^{-1}$ et de $CDBr_3$ à 632 $cm^{-1}$. Un coefficient $\alpha_{D/H}$ illustrant la sélectivité entre H et D, compris entre 5 et 10, peut être obtenu.

Dans les exemples décrits ci-dessus, on n'a utilisé comme sensibilisateur A ou composé excitateur que l'hexafluorure de soufre ($SF_6$), mais bien entendu, d'autres composés à grande énergie de dissociation susceptibles d'absorber les raies du laser à $CO_2$ peuvent être utilisés. En particulier, on peut utiliser le trichlorure de bore de formule $BCl_3$. Le $BCl_3$ absorbe l'énergie lumineuse de la raie P10 du laser $CO_2$ TEA, à 953 $cm^{-1}$. Dans différentes expériences, $BCl_3$ a été irradié en présence de $SF_5Cl$.On a constaté que $BCl_3$ dont l'énergie de dissociation est de 106 Kcal/mole se dissociait de façon négligeable dans ces expériences, et que $SF_5Cl$ se dissociait comme dans les expériences précédemment décrites. Un mélange de 800 mTorrs (106,6 pa) de $BCl_3$ et de 200 mTorrs (26,66 Pa) de $SF_5Cl$ irradié à raison de 4,3 joules/$cm^2$ a donné un coefficient $\alpha_{32/33}$ égal à 1,4 et un coefficient $\alpha_{32/34}$ égal à 2,1, illustrant réciproquement les sélectivités de $^{32}S$ et $^{33}S$ d'une part et de $^{32}S$ et $^{34}S$ d'autre part.

Dans les exemples décrits ci-dessus, on a envisagé la dissociation sélective des molécules d'un composé X par transfert vibrationnel avec des molécules d'un composé A en utilisant comme mélange gazeux initial un mélange ne contenant que du composé X et du composé A; à l'état gazeux. Cependant, en fonction des composés A et X utilisés l'addition dans ce mélange d'un ou plusieurs composés B, peut permettre d'augmenter le taux de dissociation du composé X en captant des radicaux ou atomes libres suivant un processus connu de l'homme de l'art ; le composé B peut être par exemple de l'hydrogène pour $SF_5Cl$.

De même, on a utilisé comme source lumineuse pulsée excitatrice le laser $CO_2$ TEA. L'emploi d'autres sources lumineuses pulsées permettrait de multiplier les séparations isotopiques réalisables avec le procédé de l'invention. Comme autres sources lumineuses on peut utiliser le laser à CO, le laser à HF,...

Tableau II

| Po($SF_6$) (mtorr) | Po($CF_3I$) (mtorr) | $\delta_{CF_3I}$ | $\beta_{13/12}$ | $\beta'_{13/12}$ | $\alpha_{13/12}$ |
|---|---|---|---|---|---|
| 0 | 400 | . | 1 | | 1 |
| 100 | 100 | $10^{-5}$ | 0.996 | 1.013 | 1 |
| 350 | 230 | $4.1x10^{-4}$ | 0.943 | 1.101 | 1.14 |
| 200 | 100 | $1.1x10^{-4}$ | 0.974 | 1.133 | 1.23 |
| 400 | 200 | $5.7x10^{-4}$ | 0.931 | 1.135 | 1.17 |
| 800 | 400 | $1.1x10^{-2}$ | 0.951 | 1.076 | 1.09 |

Tableau III

| $PSF_6$ (mtorr) | $PCF_3I$ (mtorr) | Sans Ag | | Avec Ag | |
|---|---|---|---|---|---|
| | | $\delta_{CF_3I}$ | $\alpha_{13/12}$ | $\delta_{CF_3I}$ | $\alpha_{13/12}$ |
| 200 | 100 | 1,3 $10^{-4}$ | 1,10 | 1,4 $10^{-3}$ | 1,36 |
| 300 | 100 | 2,2 $10^{-4}$ | 1,21 | 4,0 $10^{-4}$ | 1,34 |
| 400 | 200 | 2,8 $10^{-4}$ | 1,18 | 6,7 $10^{-4}$ | 1,25 |
| 400 | 100 | 5,0 $10^{-4}$ | 1,21 | 6,8 $10^{-4}$ | 1,26 |
| 500 | 100 | 5,0 $10^{-4}$ | 1,24 | 7,5 $10^{-4}$ | 1,26 |
| 250 | 50 | | | 5,3 $10^{-5}$ | 1,55 |

## Revendications

1. Procédé de séparation isotopique d'un composé X présentant au moins deux variétés isotopiques, caractérisé en ce que l'on excite les molécules du composé X, à l'état gazeux, de façon à obtenir leur dissociation, au moyen d'un transfert d'énergie vibrationelle entre les molécules du composé X et les molécules excitées d'un composé A, à l'état gazeux, présentant une énergie de dissociation supérieure à celle du composé X dans le but d'éviter la dissociation de A, la cinétique du transfert vibrationnel étant différente pour les deux variétés isotopiques considérées dans des conditions de température telles que la largeur thermique des raies de vibration, intervenant dans le transfert d'énergie vibrationnelle soit au plus voisine de l'écart isotopique entre les raies de résonance des deux variétés isotopiques considérées et en ce que l'on excite les molécules du composé A par une absorption de lumière émise par une source lumineuse pulsée, la durée, l'énergie des impulsions lumineuses et la section irradiée étant telles que le temps d'absorption de la lumière par les molécules du composé A soit inférieur au temps d'excitation des molécules du composé X jusqu'à leur dissociation.

2. Procédé de séparation isotopique d'un composé X présentant au moins deux variétés isotopiques, caractérisé en ce que l'on excite les molécules du composé X, à l'état gazeux, de façon à obtenir leur excitation jusqu'à un niveau non dissociatif, au moyen d'un transfert d'énergie vibrationnelle entre les molécules du composé X et les molécules excitées d'un composé A, à l'état gazeux, la cinétique du transfert vibrationnel étant différente pour les deux variétés isotopiques considérées dans des conditions de température telles que la largeur thermique des raies de vibration, intervenant dans le transfert d'énergie vibrationnelle soit au plus voisine de l'écart isotopique entre les raies de résonance des deux variétés isotopiques considérées, en ce que l'on envoie sur les molécules excitées du composé X un rayonnement ultraviolet conduisant à la séparation isotopique effective, et en ce que l'on excite les molécules du composé A par une absorption de lumière émise par une source lumineuse pulsée, la durée, l'énergie des impulsions lumineuses et la section iradiée étant telles que le temps d'absorption de la lumière par les molécules du composé A soit inférieur au temps d'excitation des molécules du composé X jusqu'au niveau vibrationnel désiré.

3. Procédé selon l'une quelconque des revendications 1 et 2, caractérisé en ce que la source de lumière est un laser pulsé.

4. Procédé selon la revendication 3, caractérisé en ce que le laser pulsé est un laser à dioxyde de carbone.

5. Procédé selon la revendication 4, caractérisé en ce que le composé A est choisi dans le groupe comprenant l'hexafluorure de soufre, le tétrafluorure de silicium, le trichlorure de bore et toute autre molécule à grande énergie de dissociation absorbant les raies du laser à dioxyde de carbone.

6. Procédé selon l'une quelconque des revendications 1 à 5, caractérisé en ce que les densités moléculaires des composés X et A sont inférieures à $2.10^{17}$ molécules/$cm^3$.

7. Procédé selon l'une quelconque des revendications 1 à 6, caractérisé en ce que la durée des impulsions lumineuses à mi-hauteur est inférieure à 500 nanosecondes.

8. Procédé selon l'une quelconque des revendications 1 à 7, caractérisé en ce que l'on augmente la dissociation du composé X en mélangeant à celui-ci un ou plusieurs composés B dans le but de capter des atomes ou radicaux libres et d'éviter ainsi des réactions secondaires.

9. Procédé selon l'une quelconque des revendications 1 à 8, caractérisé en ce que la condition de largeur thermique des raies de vibration est réalisée en cellule, refroidie ou non, les gaz étant contenus dans cette cellule (régime statique) ou traversant cette cellule (régime dynamique) ou réalisée par utilisation d'un jet moléculaire.

**Claims**

1. Process for the isotopic separation of a compound (X) having at least two isotopic varieties, characterized in that the molecules of the compound X, in the gas phase, are excited to produce their dissociation by means of a transfer of vibrational energy between the molecules of compound X and excited molecules of a compound A, in the gas phase, having a dissociation energy greater than that of compound X, whereby to avoid dissociation of A, the kinetics of vibrational energy transfer being different for the two isotopic varieties being treated, under temperature conditons such that the thermal width of the vibration beams, takins part in the transfer of vibrational energy, are at most near the isotopic difference b·tween the resonance beams of the two isotopic varieties being treated, and in that the molecules of coumpound A are excited by absorption of light emitted by a pulsed light source, the duration and energy of the light pulses and the irradiated section being such that the absorption time of light by the molecules of compound A is less than the excitation time of the molecules of compound X up to their dissociation.

2. Isotopic separation process for a compound X having at least two isotopic varieties, characterized in that the molecules of compound X, in the gas phase, are excited to produce excitation thereof up to a non-dissociated level, by means of transfer of vibrational energy between the molecules of compound X and excited molecules of a compound A, in the gas phase, the kinetics of vibrational transfer being different for the two isotopic varieties being treated, under temperature conditions such that the thermal width of the vibration beams taking part in the vibrational energy transfer is at most near the isotopic difference between the resonance rays of the two isotopic varieties being treated, and in that the excited molecules of compound X are subjected to ultraviolet radiation leading to effective isotope separation, and in that the molecules of compound A are excited by absorption of light emitted by a pulsed light source, the duration and energy of the light pulses, and the section irradiated being such that the absorption time of light by the molecules of compound A is less than the excitation time of the molecules of compound X up to the desired vibrational evel.

3. Process according to either of Claims 1 and 2, characterized in that the light source is a pulsed laser.

4. Process according to Claim 3, characterized in that the pulsed laser is a carbon dioxide laser.

5. Process according to Claim 4, characterized in that compound A is selected from the group containing sulfur hexafluoride, silicone tetrafluoride, boron trichloride and any other molecule of large dissociation energy absorbing the rays of a carbon dioxide laser.

6. Process according to any one of Claims 1 to 5, characterized in that the molecular density of compounds X and A is less than $2.10^{17}$ molecules/$cm^3$.

7. Process according to any one of Claims 1 to 6, characterized in that the duration of the light pulses of half height is less than 500 nanoseconds.

8. Process according to any one of Claims 1 to 7, characterized in that dissociation of compound X is increased by mixing therewith one or more compounds B whereby to capture atoms or free radicals and thereby to avoid secondary reactions.

9. Process according to any one of Claims 1 to 8, characterized in that the conditions of thermal width of the vibration beams is realized in a cooled or non-cooled cell, the gases being contained within said cell (static mode) or passing through said cell (dynamic mode) or produced employing a molecular jet.

**Patentansprüche**

1. Verfahren zur Isotopentrennung von einer Verbindung X, die wenigstens zwei Isotopenarten aufweist, dadurch gekennzeichnet, daß die Moleküle der Verbindung X im gasförmigen Zustand derart angeregt werden, daß ihre Dissoziation mittels Übertragung von Schwingungsenergie zwischen den Molekülen der Verbindung X und den angeregten Molekülen einer Verbindung A erhalten wird, welche sich im gasförmigen Zustand befindet und eine größere Dissoziationsenergie als diejenige der Verbindung X aufweist, damit die Dissoziation von A vermieden wird, daß die Kinetik der Schwingungsübertragung bei den zwei betrachteten Isotopenarten bei Temperaturbedingungen unterschiedlich ist, derart, daß die Breite der thermischen Schwingungslinien, die bei der Schwingungsenergieübertragung beteiligt sind, höchstens dem Isotopenabstand zwischen den zwei Resonanzlinien der zwei betrachteten Isotopenarten benachbart ist, und daß die Moleküle der Verbindung A durch Absorption von Licht angeregt werden, welches von einer gepulsten Lichtquelle ausgesandt wird, wobei die Dauer, die Energie der Lichtimpulse und der bestrahlte Bereich derart sind, daß die Absorptionszeit des Lichtes durch die Moleküle der Verbindung A kürzer als die Anregungszeit der Moleküle der Verbindung X bis zu ihrer Dissoziation ist.

2. Verfahren zur Isotopentrennung von einer Verbindung X, die wenigstens zwei Isotopenarten aufweist, dadurch gekennzeichnet, daß die Moleküle der Verbindung X im gasförmigen Zustand derart angeregt werden, daß ihre Dissoziation mittels Übertragung von Schwingungsenergie zwischen den Molekülen der Verbindung X und den angeregten Molekülen einer Verbindung A erhalten wird, welche

sich im gasförmigen Zustand befindet und eine größere Dissoziationsenergie als diejenige der Verbindung X aufweist, damit die Dissoziation von A vermieden wird, daß die Kinetik der Schwingungsübertragung bei den zwei betrachteten Isotopenarten bei Temperaturbedingungen unterschiedlich ist, derart, daß die Breite der thermischen Schwingungslinien, die bei der Schwingungsenergieübertragung beteiligt sind, höchstens dem Isotopenabstand zwischen den zwei Resonanzlinien der zwei betrachteten Isotopenarten benachbart ist, und daß auf die angeregten Moleküle der Verbindung X eine Ultraviolettstrahlung gerichtet wird, die zu einer effektiven Isotopentrennung führt und daß die Moleküle der Verbindung A durch Absorption von Licht angeregt werden, welches von einer gepulsten Lichtquelle ausgesandt wird, wobei die Dauer, die Energie der Lichtimpulse und der bestrahlte Bereich derart sind, daß die Absorptionszeit des ' ˙chtes durch die Moleküle der Verbindung A kürzer als die Anregungszeit der Moleküle der Verbindung X bis zu dem erwünschten Schwingungsniveau ist.

3. Verfahren nach Anspruch 1 oder 2 dadurch gekennzeichnet, daß die Lichtquelle ein gepulster Laser ist.

4. Verfahren nach Anspruch 3, dadurch gekennzeichnet, daß der gepulste laser ein Kohlendioxyd-Laser ist.

5. Verfahren nach Anspruch 4, dadurch gekennzeichnet, daß die Verbindung A aus der Gruppe ausgewählt ist, die Schwefelhexafluorid, Siliciumtetrafluorid, Bortrichlorid und alle anderen Moleküle mit großer Dissoziationsenergie enthält, die die Strahlen des Kohlenstoffdioxyd-Lasers absorbieren.

6. Verfahren nach einem der Ansprüche 1 bis 5, dadurch gekennzeichnet, daß die Moleküldichten der Verbindungen X und A kleiner als $2.10^{17}$ Moleküle/$cm^3$ sind.

7. Verfahren nach einem der Ansprüche 1 bis 6, dadurch gekennzeichnet, daß die Dauer der Lichtimpulse auf halber Höhe kleiner als 500 Nanosekunden ist.

8. Verfahren nach einem der Ansprüche 1 bis 7, dadurch gekennzeichnet, daß die Dissoziation der Verbindung X erhöht wird, indem dieser eine oder mehrere Verbindungen B beigemischt werden, damit freie Atome oder Radikale eingefangen werden und somit Sekundärreaktionen vermieden werden.

9. Verfahren nach einem der Ansprüche 1 bis 8, dadurch gekennzeichnet, daß der Zustand der thermischen Breite der Schwingungslinien in einer Zelle, die gekühlt ist oder auch nicht, hergestellt wird, wobei die Gase in dieser Zelle enthalten sind (statischer Zustand) oder diese Zelle durchströmen (dynamischer Zustand), oder durch Verwendung eines Molekularstrahls hergestellt wird.

FIG.1

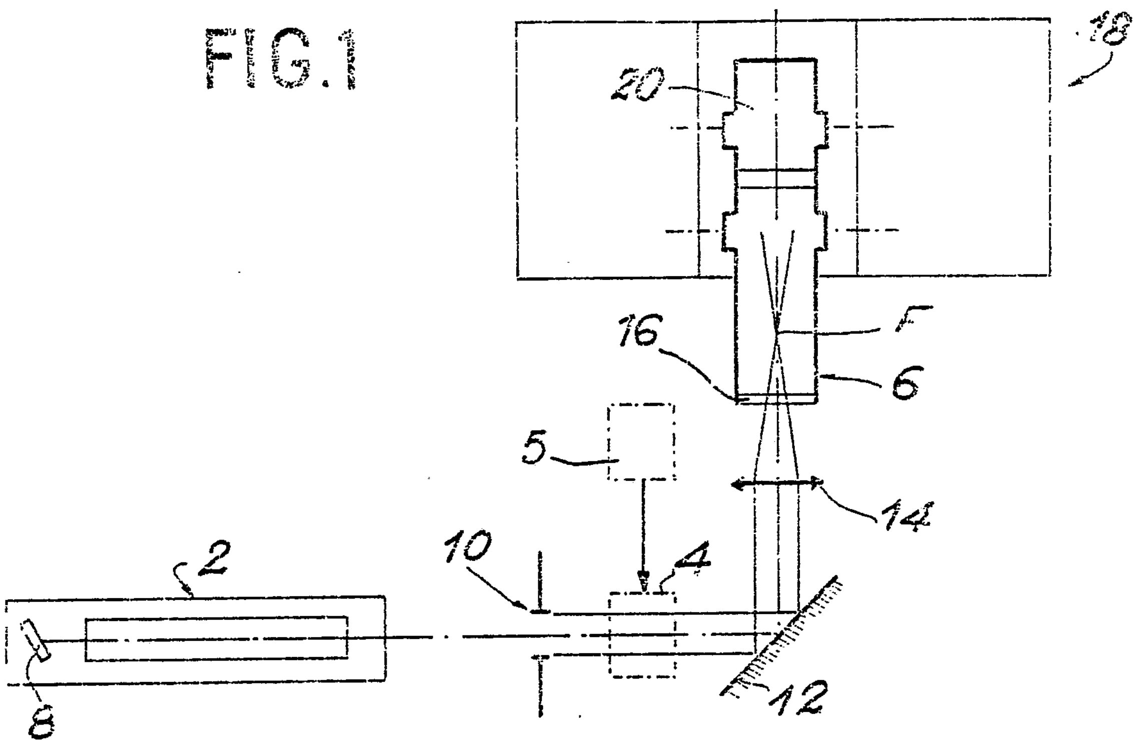


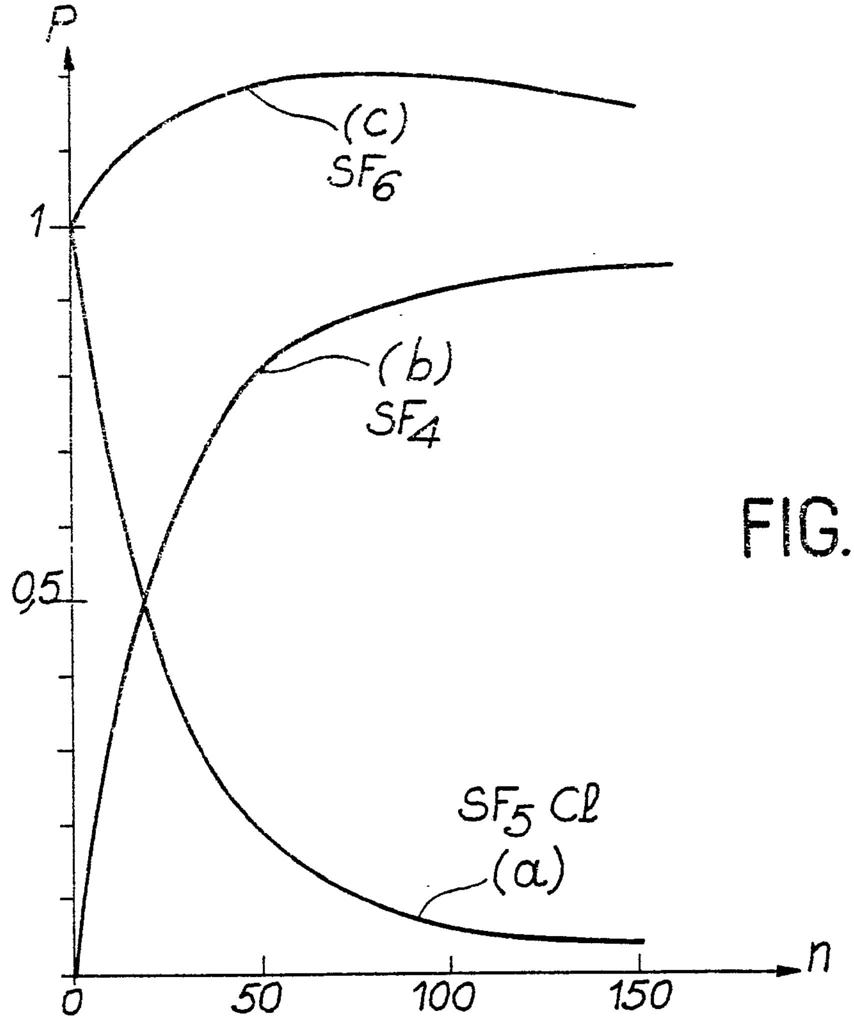


FIG. 2

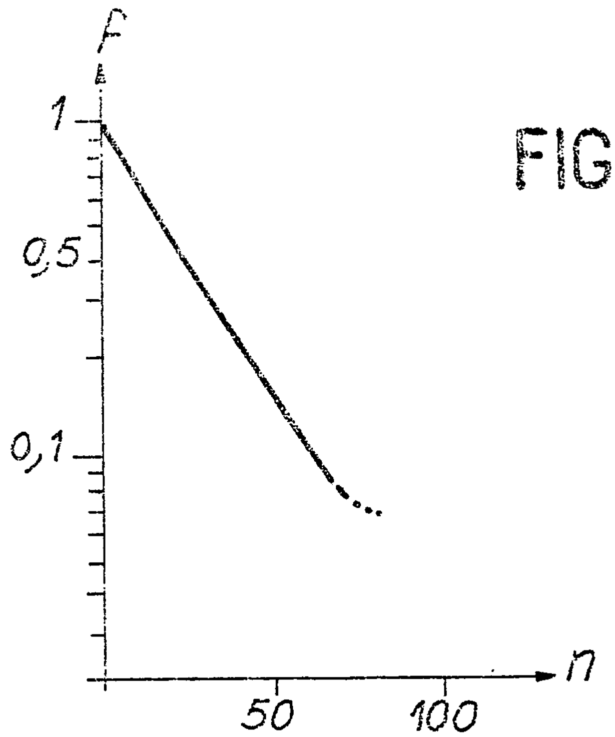
F
1
0,5
0,1
n
50
100

FIG. 3

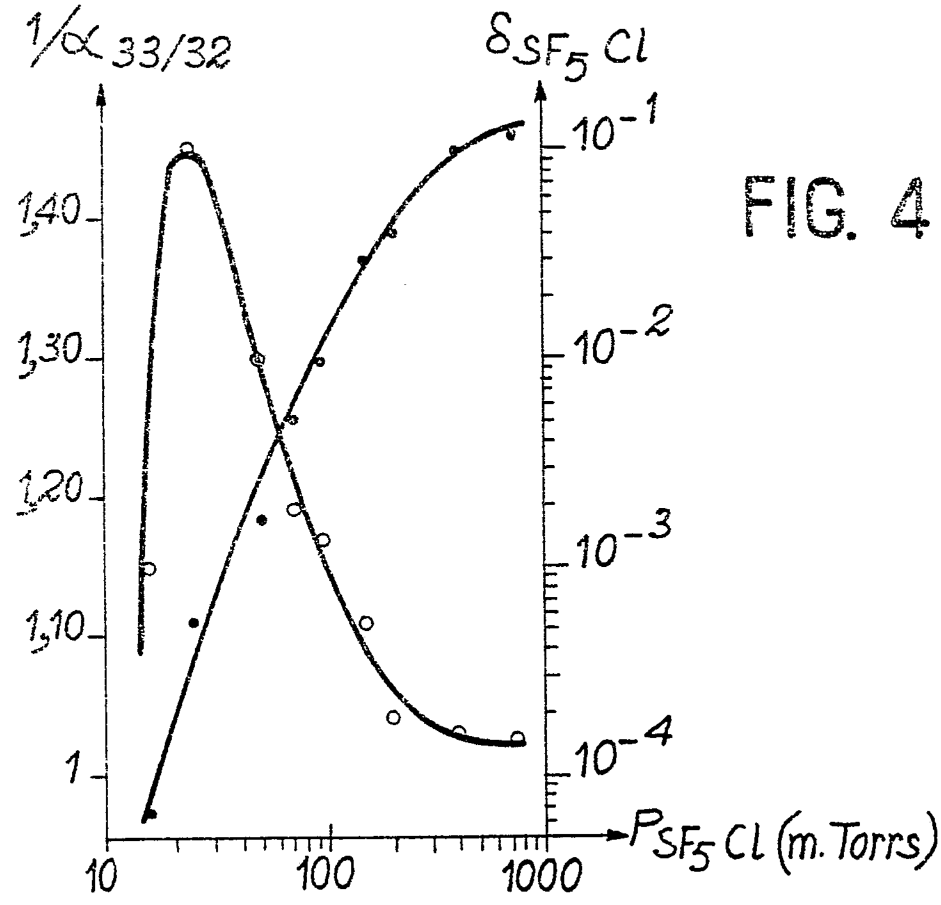
1/α 33/32
δ SF5 Cl
1,40
1,30
1,20
1,10
1
10^-1
10^-2
10^-3
10^-4
10
100
1000
P SF5 Cl (m. Torrs)

FIG. 4

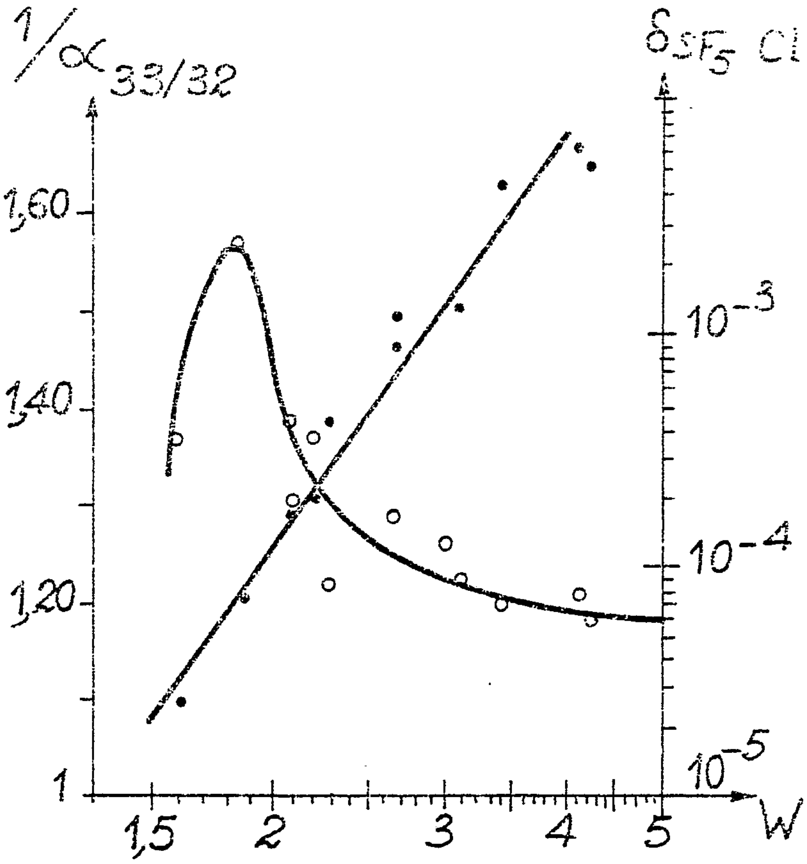

1/α 33/32
δ SF5 Cl
1,60
1,40
1,20
1
10^-3
10^-4
10^-5
1,5
2
3
4
5
W


FIG. 5

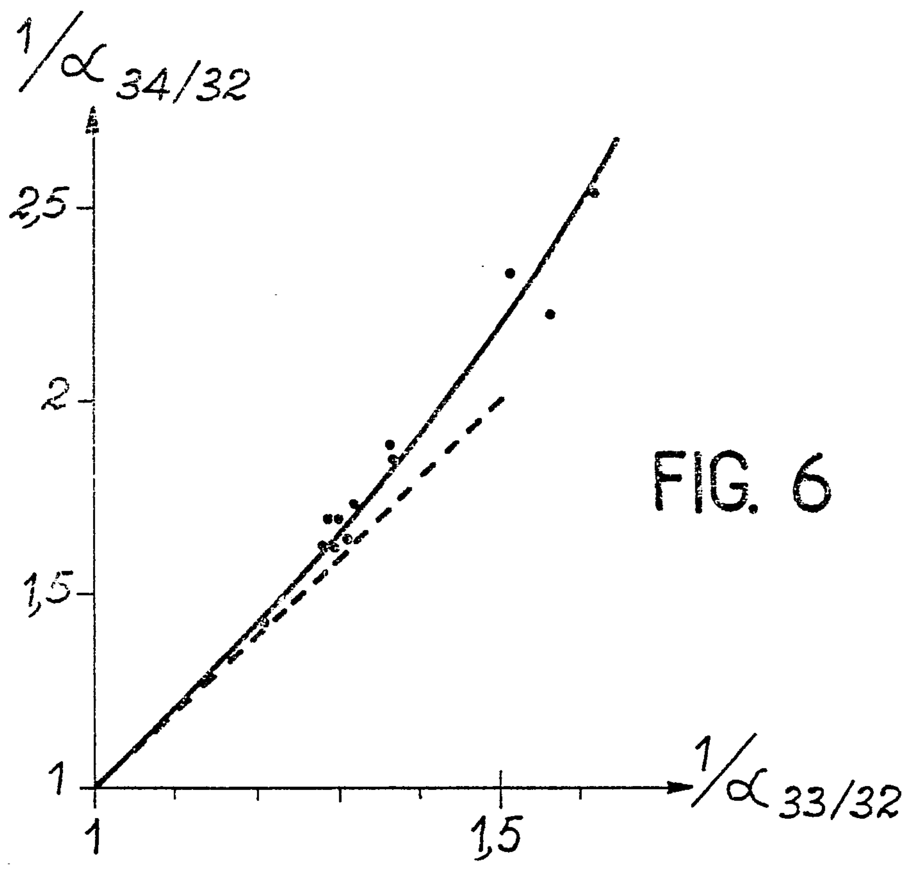

1/α 34/32
2,5
2
1,5
1
1/α 33/32
1
1,5


FIG. 6

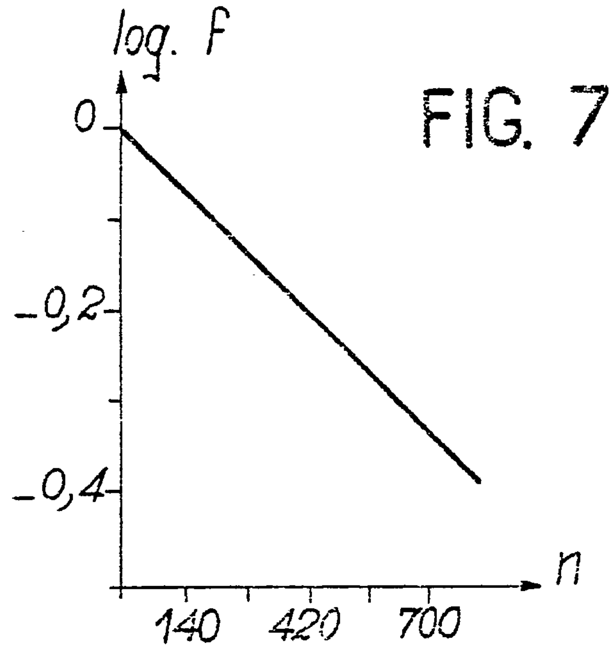


FIG. 7

FIG. 8

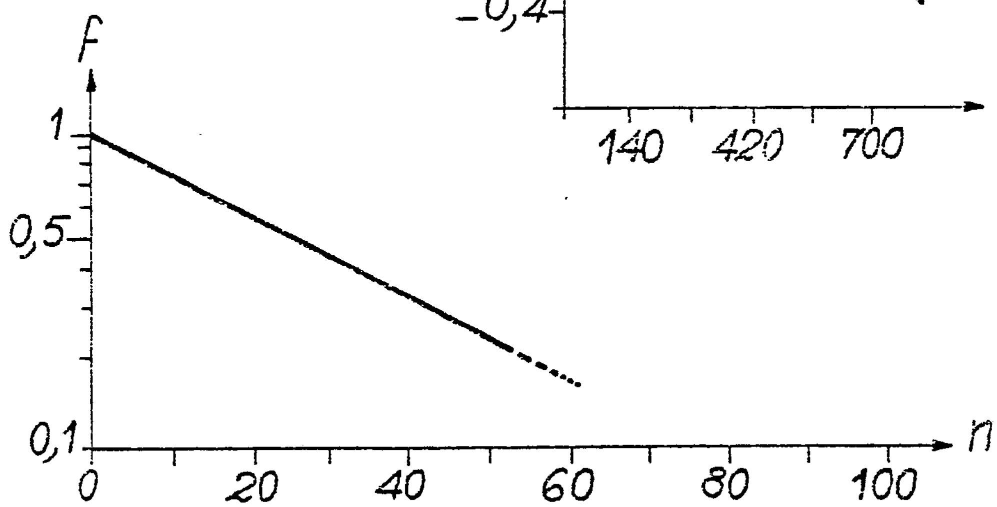


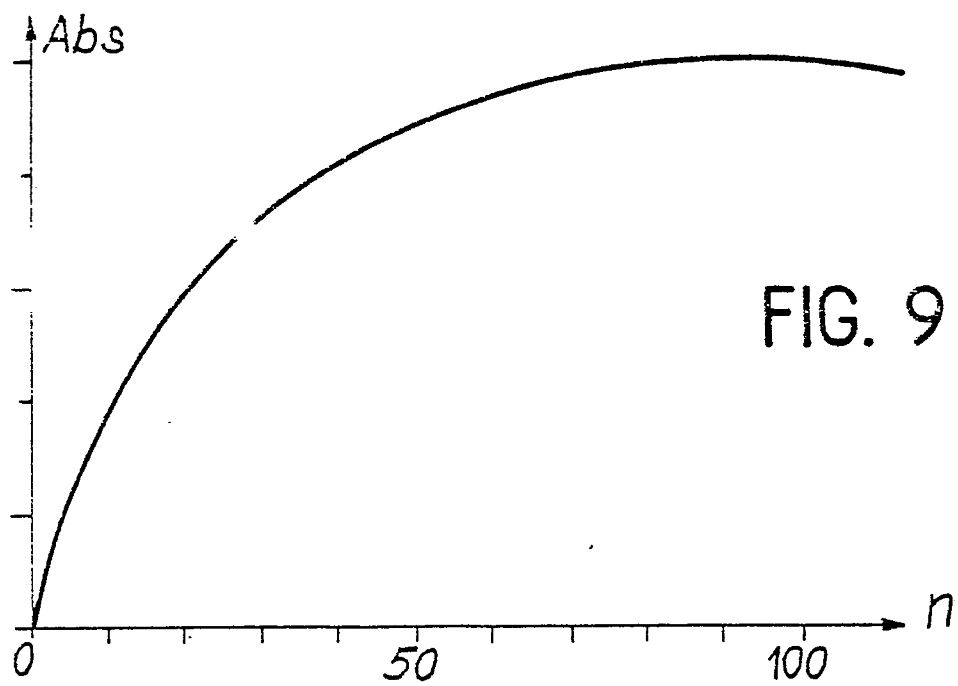


FIG. 9